# FASCICULE DE BREVET EUROPEEN

(11) **EP 2 045 044 B1**
(45) Date de publication et mention de la délivrance du brevet: **04.12.2013**
(21) Numéro de dépôt: 08165729.8
(22) Date de dépôt: 02.10.2008
(51) Int. Cl.: B25B 27/30, B60G 15/06

(54) **Procédé d'assemblage de jambe de force et jambe de force assemblée selon ce procédé**
Verfahren zum Zusammensetzen eines Federbeins und nach diesem Verfahren zusammengesetztes Federbein
Method of assembling a strut unit and strut unit assembled according to this method

(30) Priorité: 05.10.2007 FR 0758094
(43) Date de publication de la demande: 08.04.2009
(73) Titulaire: ALLEVARD REJNA AUTOSUSPENSIONS, 92210 Saint-Cloud (FR)
(72) Inventeur: Hastey, Jean-Paul, 59500 Douai (FR); Duquesne, Thierry, 59450 Sin le Noble (FR)
(74) Mandataire: Intès, Didier Gérard André

(56) Documents cités:
- EP-A- 0 925 966
- FR-A- 2 451 805
- FR-A- 2 698 818
- US-A- 3 973 314
- US-A- 4 276 684
- US-A- 4 442 580
- US-A- 4 930 751
- US-E- R E34 097

## Description

La présente invention concerne un procédé de pré-assemblage de jambe de force avant son installation sur un véhicule. Une jambe de force est constituée d'un amortisseur, d'un ressort de suspension hélicoïdal, d'un appui supérieur et d'un appui inférieur pour le ressort de suspension. Le but de la présente invention est de faciliter l'assemblage ou pré-assemblage de la jambe de force, notamment par un équipementier automobile. L'objet de la présente invention concerne également le ressort de suspension comme fourniture intermédiaire ainsi que la jambe de force obtenue par ledit procédé.

Un procédé employé selon l'art antérieur pour assembler une jambe de force est le suivant. Tout d'abord il faut fixer l'amortisseur pour qu'il reste stable quand on lui applique un effort de compression. Ensuite le ressort de suspension est placé coaxialement à l'amortisseur de sorte qu'il prenne appui sur une coupelle inférieure solidaire de l'amortisseur. Sur l'extrémité libre du ressort de suspension est disposé un bloc filtrant comportant la coupelle d'appui supérieur du ressort de suspension. L'ensemble est alors comprimé de sorte que la tige de l'amortisseur passe par le trou du bloc filtrant. Un écrou est vissé sur l'extrémité de la tige d'amortisseur afin de solidariser l'ensemble ressort de suspension-bloc filtrant et amortisseur. Enfin l'effort de compression est relâché et la jambe de force est alors assemblée en position détendue.

La nécessité de comprimer le ressort de suspension durant le montage implique l'usage d'outillages importants. De plus, cette opération présente le risque d'un mauvais positionnement du ressort de suspension pouvant conduire à des difficultés de montage de la jambe de force sur la structure du véhicule. Cette opération présente également un risque d'endommagement du ressort de suspension qui peut être néfaste à sa durée de vie. Enfin ce procédé présente des difficultés lors de l'assemblage de jambes de force munies de ressort de suspension à génératrices courbes.

Le document US 4 442 580 propose un outil en forme de crochet articulé permettant de bloquer un ressort pour le démontage puis le remontage de ce dernier sur une jambe de force. Cet outil est destiné plus spécifiquement aux garagistes pour intervenir sur une jambe de force quelconque déjà montée sur un véhicule. Cet outil est donc un outil généraliste pour une intervention sur véhicule déjà mis en service. Dans le cadre du pré-assemblage d'une jambe de force par un équipementier, cet outil n'est pas adapté car ses caractéristiques ne sont pas nécessairement celles requises pour le pré-montage d'une jambe de force donnée. De plus l'articulation de l'outil rend son utilisation délicate. En effet, le crochet étant articulé, ce dernier présente une instabilité structurelle vis-à-vis du ressort. Un tel outil ne convient pas au pré-assemblage en série et en grand nombre d'une jambe de force dans un atelier d'équipementier automobile.

Par ailleurs, les documents US-A-4276684, FR-A-2451805, US-Re34097, FR-A-2698818, US-A-4930751 ont tous trait au démontage et remontage d'un ressort sur une jambe de force déjà installée sur un véhicule.

La présente invention se propose d'apporter une solution à la problématique ci-dessus en utilisant, lors de l'assemblage, un ressort de suspension pré-comprimé à une longueur correspondant à la position de la jambe de force détendue.

Ainsi le procédé proposé pour le préassemblage d'une jambe de force de suspension comprenant un amortisseur, un ressort de suspension, un appui supérieur de ressort de suspension et un appui inférieur pour le ressort de suspension est articulé autour des étapes successives suivantes. Tout d'abord le ressort de suspension est comprimé avant la phase d'assemblage à une longueur prédéterminée et indépendamment des autres éléments constitutifs de la jambe de force de suspension. Ensuite le ressort de suspension est maintenu comprimé à cette longueur prédéterminée par des moyens de blocage mécanique en extension. Enfin la jambe de force est assemblée, le ressort de suspension étant maintenu comprimé à cette longueur prédéterminée.

On notera que la compression du ressort de suspension est indépendante et antérieure à l'assemblage de la jambe de force. En effet, la compression du ressort de suspension est faite en amont de l'assemblage de la jambe de force. Le moyen de maintien du ressort en état de pré-compression est alors posé. Ce n'est qu'à partir du moment où le ressort de suspension est maintenu dans un état de pré-compression que l'assemblage de la jambe de force peut-être effectué.

En outre, on notera que le moyen de maintien est adapté pour maintenir le ressort comprimé à une longueur prédéterminée. C'est-à-dire que la longueur des moyens de maintien est adaptée pour un modèle prédéterminé de ressort qui doit être monté sur un modèle prédéterminé de jambe de force. On comprend donc que pour des modèles différents de ressort et jambe de force, les moyens de maintien sont différents, notamment en ce qui concerne leur longueur.

Ce procédé présente l'avantage de pouvoir se passer de presse lors de l'assemblage de la jambe de force. Le ressort de suspension étant au préalable pré-comprimé, son ajustement sur la jambe de force vis-à-vis des coupelles d'appuis est également facilité. De plus tout risque d'endommagement du ressort de suspension lors de sa compression pendant la phase d'assemblage de la jambe de force est également évité. Enfin avec ce nouveau procédé, il est également possible d'assembler avec beaucoup plus de facilité qu'avant les jambes de forces équipées de ressort de suspension à génératrices courbes.

Avantageusement, le ressort de suspension peut-être maintenu comprimé à l'aide d'au moins un crochet. Ledit au moins un crochet sera monté entre certaines spires voisines de ses extrémités respectives. En fonction de la longueur dudit crochet et de la position relative des spires dudit ressort de suspension, la longueur de compression du ressort de suspension peut-être facilement ajustée.

Ce procédé d'assemblage s'appliquera avantageusement aux jambes de force de type pseudo Mac-Pherson. En effet, ce dernier type de jambe de force étant très utilisé, dans l'industrie automobile en particulier, ce procédé peut facilement être généralisé et entrainer des économies au niveau des outillages, nécessairement de moindre importance, et du temps d'assemblage. Des progrès sont également réalisés dans la qualité des assemblages.

La présente invention comprend également la jambe de force assemblée par ledit procédé en tant que fourniture intermédiaire. En effet une telle jambe de force présente, avant son installation sur véhicule, un ressort de suspension toujours comprimé, bien que ce dernier soit également maintenu bloqué par les coupelles d'appui supérieur et inférieur.

D'autres avantages et caractéristiques de l'invention ressortiront à la lecture de la description suivante faite à titre d'exemple et en référence aux dessins annexés dans lesquels :
- les figures 1 à 3 représentent les différentes étapes de l'assemblage d'une jambe de force selon le procédé de la présente invention ;
- la figure 3 représente une jambe de force assemblée selon le procédé de la présente invention, en tant que produit intermédiaire pour l'assemblage d'un véhicule automobile en état de fonctionnement ;
- la figure 4 représente un ressort de suspension maintenu à une certaine longueur, en tant que fourniture intermédiaire nécessaire à l'assemblage d'une jambe de force selon le procédé de la présente invention ; et
- la figure 5 représente ledit au moins un crochet lors de la mise en service de la jambe de force assemblée selon la présente invention.

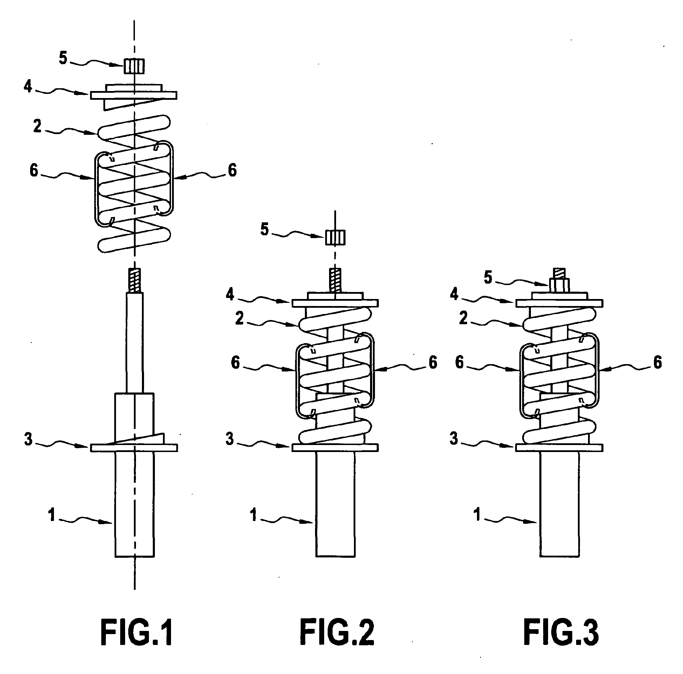

Sur les figures 1 à 3 on a représenté les différents éléments constitutifs d'une jambe de force et les étapes successives de son assemblage selon le procédé de la présente invention. Une jambe de force est constituée d'un amortisseur 1, d'un ressort de suspension 2, d'une coupelle d'appui inférieur 3 solidaire de l'amortisseur 1 et d'un bloc filtrant 4 appelé par la suite appui supérieur et comprenant entre-autre une coupelle d'appui supérieur. La jambe de force comprend également un écrou de blocage 5 destiné à maintenir l'ensemble.

Selon une caractéristique de l'invention, le ressort de suspension 2 est maintenu comprimé à une certaine longueur par au moins un crochet 6. Deux crochets sont représentés sur la figure.

Les figures 1 à 3 schématisent le procédé d'assemblage en trois étapes.

Lors de l'étape 1, sur la figure 1, le ressort 2 est placé coaxialement à l'amortisseur 1 sur l'appui inférieur 3 solidaire de l'amortisseur 1. Le bloc filtrant 4 est ensuite également placé coaxialement à l'amortisseur 1, en appui sur le ressort 2. Le positionnement de l'ensemble ressort 2-bloc filtrant 4 est alors ajusté.

A l'étape 2, sur la figure 2, l'écrou 5 est vissé de manière à venir en butée avec le bloc filtrant 4. Le ressort de suspension 2 est supposé être pré-comprimé à une longueur telle que le niveau supérieur de l'ensemble ressort 2-bloc filtrant 4 soit au niveau du filetage de la tige de l'amortisseur 1. Ainsi la course de l'écrou n'est pas limitée par la longueur du filetage de la tige de l'amortisseur et les conditions de serrage sont aisées.

L'écrou 5 est alors bloqué et la jambe de force est finie d'être assemblée à l'étape 3 sur la figure 3. Selon l'invention il n'est pas imposé de bloquer l'écrou à un couple de serrage prédéterminé. Cependant, ce type de précaution peut-être envisagé pour certains types d'assemblages.

La figure 3 représente une jambe de force détendue assemblée selon le procédé de la présente invention. Les crochets encore présents montrent que la jambe de force n'a pas encore été mise en service.

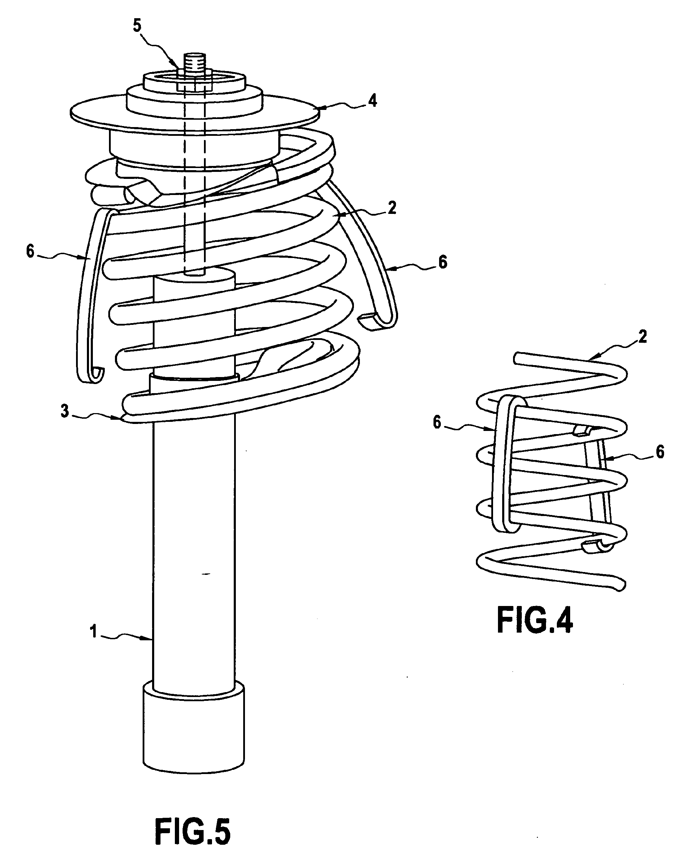

La figure 4 représente un ressort de suspension maintenu comprimé sur cet exemple par deux crochets. Ce ressort de suspension constitue une fourniture intermédiaire nécessaire au procédé de montage de la présente invention.

La figure 5 représente une jambe de force lors de sa mise en service, c'est-à-dire subissant un effort de compression lorsque le véhicule est sur ses roues. Dans un tel état, la figure 5 montre qu'il est alors aisé de déposer ledit au moins un crochet : le ressort se comprime davantage et les crochets se dégagent facilement, voire tombent au sol.

## Revendications

1. Procédé de pré-assemblage de jambe de force avant son installation sur véhicule, comprenant un amortisseur (1), un ressort de suspension (2), un appui supérieur (4) de ressort (2) et un appui inférieur (3) de ressort (2) **caractérisé en ce que** :
le ressort de suspension (2) est comprimé à une longueur prédéterminée avant la phase d'assemblage et indépendamment des autres éléments constitutifs de la jambe de force de suspension, et
le ressort de suspension est maintenu comprimé à une longueur prédéterminée correspondant sa longueur quand il est monté sur la jambe de force lorsque la jambe de force est détendue, par des moyens de blocage mécanique en extension (6), et
la jambe de force est alors assemblée, le ressort de suspension (2) étant maintenu comprimé à une longueur prédéterminée par lesdits moyens de blocage (6).

2. Procédé de pré-assemblage de jambe de force selon la revendication 1 **caractérisé en ce que** le ressort de suspension (2) est maintenu comprimé au moyen d'au moins un crochet (6).

3. Procédé de pré-assemblage de jambe de force selon la revendication 1 ou 2, **caractérisé en ce que** la suspension est de type pseudo Mac-Pherson.

4. Jambe de force pré-assemblée avant son installation sur véhicule, comprenant un amortisseur (1), un ressort de suspension (2), un appui supérieur (4) de ressort de suspension (2) et un appui inférieur (3) de ressort de suspension (2) **caractérisée en ce que** le ressort de suspension (2) est maintenu comprimé à une longueur prédéterminée correspondant à sa longueur quand il est monté sur la jambe de force lorsque la jambe de force est détendue, par des moyens de blocage mécanique en extension, lesdits moyens de blocages étant constitués par au moins un crochet (6) monté entre certaines spires voisines des extrémités respectives dudit ressort (2).

## Patentansprüche

1. Verfahren zur Vormontage eines Federbeins vor seinem Einbau an einem Fahrzeug, umfassend einen Dämpfer (1), eine Tragfeder (2), eine obere Stütze (4) der Feder (2) und eine untere Stütze (3) der Feder (2), **dadurch gekennzeichnet, dass**:
die Tragfeder (2) vor der Montagephase und unabhängig von den weiteren nachfolgenden Elementen des Federbeins der Aufhängung auf eine vorbestimmte Länge eingefedert wird, und
die Tragfeder durch Mittel zum mechanischen Festlegen gegen eine Längung (6) auf eine vorbestimmte Länge eingefedert gehalten wird, die ihrer Länge entspricht, wenn sie an dem Federbein angebracht ist, wenn das Federbein entspannt ist, und
das Federbein dann montiert wird, wobei die Tragfeder (2) durch die Festlegungsmittel (6) auf eine vorbestimmte Länge eingefedert gehalten wird.

2. Verfahren zur Vormontage eines Federbeins nach Anspruch 1, **dadurch gekennzeichnet, dass** die Tragfeder (2) mittels wenigstens eines Hakens (6) eingefedert gehalten wird.

3. Verfahren zur Vormontage eines Federbeins nach Anspruch 1 oder 2, **dadurch gekennzeichnet, dass** die Aufhängung vom Typ Pseudo-McPherson ist.

4. Federbein, das vor seinem Einbau an einem Fahrzeug vormontiert wird, umfassend einen Dämpfer (1), eine Tragfeder (2), eine obere Stütze (4) der Tragfeder (2) und eine untere Stütze (3) der Tragfeder (2), **dadurch gekennzeichnet, dass** die Tragfeder (2) durch Mittel zum mechanischen Festlegen gegen eine Längung auf eine vorbestimmte Länge eingefedert gehalten wird, die ihrer Länge entspricht, wenn sie an dem Federbein angebracht ist, wenn das Federbein entspannt ist, wobei die Festlegungsmittel durch wenigstens einen Haken (6), der zwischen einigen benachbarten Windungen der jeweiligen Enden der Feder (2) angebracht ist, gebildet sind.

## Claims

1. A method of pre-assembling a strut unit before installation on a vehicle, the strut unit comprising a shock absorber (1), a suspension spring (2), a top bearing point (4) for the spring (2), and a bottom bearing point (3) for the spring (2), the method being **characterized by** the following steps:
compressing the suspension spring (2) to a predetermined length before the assembly stage and independently of the other elements constituting the suspension strut unit;
holding the suspension spring compressed at a predetermined length corresponding to its length when it is mounted on the strut unit and the strut unit is relaxed, the spring being held by mechanical blocking means (6) for preventing extension; and
then assembling the strut unit, the suspension spring (2) being held compressed at a predetermined length by said blocking means (6).

2. A method of pre-assembling a strut unit in accordance with claim 1, the method being **characterized in that** the suspension spring (2) is held compressed by means of at least one hook (6).

3. A method of pre-assembling a strut unit in accordance with claim 1 or claim 2, the method being **characterized in that** the suspension is of the pseudo-MacPherson type.

4. A pre-assembled strut unit prior to installation on a vehicle, the strut unit comprising a shock absorber (1), a suspension spring (2), a top bearing point (4) for the suspension spring (2), and a bottom bearing point (3) for the suspension spring (2), the strut unit being **characterized in that** the suspension spring (2) is held compressed at a predetermined length corresponding to its length when it is mounted on the strut unit and the strut unit is relaxed, the spring being held by mechanical blocking means for preventing extension, said blocking means being constituted by at least one hook (6) mounted between certain turns adjacent to the respective ends of said spring (2).
